# EUROPEAN PATENT SPECIFICATION

(11) **EP 4 112 443 B1**
(45) Date of publication and mention of the grant of the patent: **06.08.2025**
(21) Application number: 21182980.9
(22) Date of filing: 30.06.2021
(51) Int. Cl.: B64C 1/06, B64D 11/00

(54) **STRUCTURAL SYSTEM FOR AN AIRCRAFT FOR INSTALLATION OF EQUIPMENT**
STRUKTURELLES SYSTEM FÜR EIN FLUGZEUG ZUR INSTALLATION VON AUSRÜSTUNG
SYSTÈME STRUCTURAL D'AÉRONEF POUR L'INSTALLATION D'ÉQUIPEMENT

(43) Date of publication of application: 04.01.2023
(73) Proprietor: Airbus Operations GmbH, 21129 Hamburg (DE)
(72) Inventor: GROSS, Claus-Peter, 21129 Hamburg (DE)
(74) Representative: LKGLOBAL Lorenz & Kopf Patentanwalt Attorney at Law PartG mbB

(56) References cited:
- EP-A1- 3 623 646
- DE-A1- 102011 084 722
- US-A- 5 108 048
- US-A1- 2019 193 871
- US-B1- 6 883 753

## Description

### TECHNICAL FIELD

The invention relates to a structural system for an aircraft and an aircraft having a structural system and at least one piece of equipment attachable to the structural system.

### BACKGROUND OF THE INVENTION

In common aircraft design, circumferential stiffening frames as well as longitudinally arranged axial stiffening elements are provided to stiffen the outer skin of the aircraft fuselage. After connecting the skin, the stiffening frames, and the longitudinal stiffening elements to form a structure, fittings are attached to the stiffening frames and the stiffening elements to hold overhead stowage bins or the like. For this, often a laser beam aligned in the fuselage of the aircraft is used to manually align and drill drill holes for the fittings in a plurality of consecutive stiffening frames in order to provide an exact spatial alignment of the drill holes. The laser beam indicates an interface axis to the overhead stowage bins. While the drill holes are drilled, no other work is conducted inside the structure. Furthermore, this process is time-consuming.

US 6 883 753 B1 describes a monument support system for an aircraft. The system includes multiple aircraft frame elements. An adapter bridge is coupled to the aircraft frame elements and has multiple attachment points. A coupling member is coupled to the adapter bridge. A monument is coupled to the frame elements via the adapter bridge and the coupling member.

US 5 108 048 A describes a quickly releasable stowage bin mountable on one or more support panels affixed to the interior of an aircraft. In the installation of a single stowage bin, quickly releasable mounting mechanisms affix the upper and lower portion of the stowage bin to the upper and lower portion of a support panel or panels. Each support panel are initially aligned in the factory whereby a conversion of the aircraft from freighter mode to full or partial passenger mode, results in a rapid, easy, secure, and quality installation of each stowage bin. The quickly releasable mounting mechanisms also facilitate the rapid and easy removal of each stowage bin from within a compartment of the aircraft during conversion of that compartment from passenger mode to freighter mode.

US 2019 / 193 871 A1 describes a system with a frame with first and second spaced apart edges, a first holder couplable to the fuselage structure and embodied for articulated connection to a first region of the frame that is close to the first edge, a second holder couplable to the fuselage structure, and a strut. A first end of the strut is connectable in an articulated manner to the second holder. A second end of the strut is connectable in an articulated manner to a second region of the frame near the second edge and remote from the first edge. The frame and the strut form a triangular structure with the first and second holders. The strut and the frame form two sides of the triangular structure. A length of the first and/or second side is variable to adjust the position of the frame.

EP 3 623 646 A1 describes a connecting device that comprises an eccentric pin as well as an eccentric sleeve intended to be mounted on the eccentric pin so as to allow, by suitable rotational positioning of the eccentric sleeve on the eccentric shaft, compensating for any clearance between circular holes superimposed on the mechanical parts to be linked together by means of said linking device. The connecting device also comprising locking elements capable of locking the eccentric pin and the eccentric sleeve in rotation, said connecting device thus making it possible to generate a fast, clean link capable of compensating for play locally.

### SUMMARY OF THE INVENTION

It is thus an object of the invention to propose a structural system for an aircraft that allows a faster attachment of pieces of equipment inside the aircraft structure, wherein the equipment is spatially alignable as exact as possible in the structure. This object is met by the structural system for an aircraft according to the features of claim 1. Advantageous improvements and further embodiments may be gathered from the subclaims and the following description.

The invention is defined by the claims.

According to the invention, a structural system for an aircraft is provided, comprising circumferential stiffening frames for stiffening a fuselage of the aircraft, the stiffening frames comprising a cross-sectional profile having a web enclosed by a radial inner flange and a radial outer flange, at least one first bracket, and at least one attachment device connectable to the at least one first bracket for fastening a piece of equipment to the at least one first bracket, wherein the stiffening frames each comprise a first pattern of drill holes adapted for receiving the at least one first bracket, wherein the at least one first bracket is adapted to protrude from the stiffening frames in a radial direction when attached, and wherein the attachment device is adapted for fastening the piece of equipment in a variable, arrestable radial distance to the respective first bracket. The structural system further comprises at least one support frame attachable to the piece of equipment, the at least one support frame having a first attachment region for connecting to the at least one first bracket and having a second attachment region for connecting to a further connecting element. The support frame has a substantially triangular shape.

The circumferential stiffening frames are based on common circumferential stiffening frames. It is conceivable that the structural system comprises a plurality of stiffening frames in a staggered manner along the longitudinal axis of an aircraft, while they extend perpendicularly to the longitudinal axis. The circumferential stiffening frames may preferably comprise a circumferentially closed contour.

The at least one circumferential stiffening frame comprises a cross-sectional profile having a web that substantially extends in a radial direction, i.e. perpendicular to the longitudinal axis of the aircraft. At the inner delimitation of the web, the inner flange is arranged. Together with the web it may create a T-shape or an L-shape. In the latter case, the inner flange may be arranged to extend only to a single side of the web. At an outer delimitation of the web, the outer flange may be provided, which may be designed in analogy to the inner flange. The cross-sectional profile may thus comprise a T-shape, an S-shape, a C-shape, or an intermediate shape.

According to the invention, the circumferential stiffening frames each comprise the first pattern of drill holes. These are drilled into the stiffening frames before the installation of the frames. Thus, when the aircraft structure is created, the installation of pieces of equipment may be conducted by selecting stiffening at suitable positions to install one or a plurality of first brackets. Consequently, drill holes do not need to be drilled after directly before installation. Thus, the plurality of stiffening frames allow a flexible and fast installation. Unavoidable, manufacturing-induced measure tolerances can be compensated by the attachment device. This is adapted for adjusting and arresting a radial distance from the bracket that is fixed to the first pattern of drill holes. For example, it may comprise an eccentrical component, which is connectable to the piece of equipment and may be rotatable and arrestable. However, solutions with a thread or other length-variable devices may also be conceivable.

The interior space of the aircraft structure, which comprises the structural system according to the above, is blocked for a clearly shorter time than with common installation procedures and structural setups. The structural system according to the invention thus allows a faster and more flexible installation of pieces of equipment. The structural system may further comprise at least one second bracket, wherein the stiffening frames each comprise a second pattern of drill holes adapted for receiving the at least one second bracket, and wherein the second pattern is arranged at a distance to the first pattern.

According to the invention, the structural system further comprises at least one support frame attachable to the piece of equipment, the at least one support frame having a first attachment region for connecting to the at least one first bracket and a having a second attachment region for connecting to a further connecting element. The support frame may be realized as a rigid component, which is attachable to a piece of equipment. It is conceivable that the support frame is directly attachable to the first bracket and the second attachment region, i.e. the further connecting element. Thus, the support frame may be aligned in the same plane as a single stiffening frame. For example, if the piece of equipment is an overhead stowage compartment, it may comprise a case or housing that encloses a stowage volume and has two end faces that will be aligned to either face forward or backward. The support frame may be directly attached to one of these end faces. The support frame may additionally be designed in such a way that at least one protruding lug or web is provided that is capable of connecting the support frame to the at least one first bracket and/or the further connecting element.

The further connecting element may comprise the at least one second bracket in combination with the at least one attachment device. Thus, the support frame is directly connected to two brackets, wherein each of them comprises an attachment device that has a radial tolerance compensation feature.

According to the invention, the support frame has a substantially triangular shape. Therefore, one of the edges, i.e. a bottom edge, of the support frame may be aligned to run parallel to a floor in the cabin of the respective aircraft, the two other edges run from the bottom edge to a top peak that is connectable to the first bracket. The support frame may have a grid, stripe, or skeleton shape, in which as much material may be left out as possible to minimize the weight of the support frame.

The structural system may further comprise axial stiffening elements, wherein the stiffening frames comprise radial outer cutouts for letting the axial stiffening elements pass through in a transverse direction to the respective stiffening frame, and wherein at least one of the axial stiffening elements comprises a third pattern of drill holes for receiving at least one third bracket. The axial stiffening elements, which may also be referred to as longitudinal stiffening elements or stringers, extend along the longitudinal axis of an aircraft structure on the inner surface of the aircraft skin. They also provide the possibility to attach a piece of equipment to the aircraft structure. As the axial stiffening elements extend along the longitudinal axis, they may be predestined for a providing a supporting force along a longitudinal axis.

The structural system may further comprise a tie rod having a variable length and may be connectable to the at least one third bracket for supporting the piece of equipment in a longitudinal direction. A tie rod may simply be bolted to the third bracket and hold the piece of equipment in a variable distance. Hence, manufacturing induced tolerances can be compensated to align the respective piece of equipment in a spatially desired manner independent of measurement deviations of the aircraft structure.

The attachment device may comprise a rotatable and arrestable sleeve having an eccentric borehole for tolerance compensation in a radial direction. By rotating the eccentric sleeve about the eccentric axis, a simple tolerance compensation preferably in a plane perpendicular to the longitudinal axis may be provided.

It may be advantageous if the first pattern is arranged in a top region of the circumferential stiffening frames. Thus, the first pattern serves for attaching the respective piece of equipment in an upper region of the cabin at a clear distance from e.g. a cabin window or a central region of a lining segment. The first pattern may thus provide for a vertical support.

Exemplarily, the second pattern may be arranged in a lateral region of the circumferential stiffening frames. The second pattern may thus serve for a support of the piece of equipment in a lateral direction.

The invention further relates to an aircraft, having a structural system according to the above description and at least one piece of equipment attachable to at least one of the circumferential stiffening frames of the structural system through the at least one first bracket.

In the aircraft, the at least one piece of equipment comprises an overhead stowage bin.

Still further, the at least one piece of equipment may be attachable to the structural system through the at least one second bracket and/or the third bracket.

### BRIEF DESCRIPTION OF THE DRAWINGS

Other characteristics, advantages and potential applications of the present invention result from the following description of the exemplary embodiments illustrated in the figures.

Furthermore, identical or similar objects are identified by the same reference symbols in the figures.
Fig. 1 and 2 show a structural system in two different views.
Fig. 3 shows a structural system in a detail view.
Fig. 4a to 4f show the process of installing the piece of equipment.
Fig. 5 shows an aircraft.

### DETAILED DESCRIPTION OF EXEMPLARY EMBODIMENTS

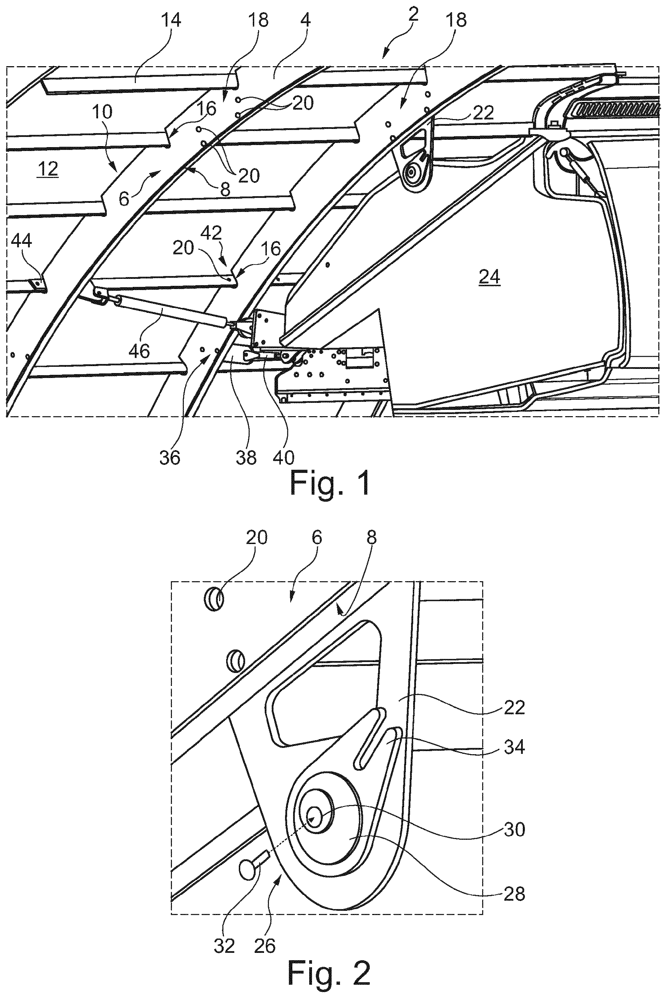

Fig. 1 shows a structural system 2 for an aircraft in a spatial view. Here, a plurality of circumferential stiffening frames 4 are shown. These provide a circumferentially closed contour and are arranged at a distance to each other along a longitudinal axis of the respective aircraft. The stiffening frames 4 comprise a web 6, an inner flange 8 and an outer flange 10. A skin 12 is arranged on the outer flanges 10 of all circumferential stiffening frames 4. Thus, a hollow cylindrical fuselage structure is created. In addition, longitudinal, axial stiffening elements 14 are provided, which cross the stiffening frames 4 and run through radial outer cutouts 16.

The stiffening frames 4 comprise a first pattern 18 of drill holes 20 in the web 6. These drill holes allow to attach a first bracket 22 to the first pattern 18, exemplarily by bolts or screws. The first bracket 22 has a roughly triangular shape with a straight base attached to the web 6 and a circularly rounded tip that protrudes away from the frame 4. A piece of equipment 24, which is shown as an overhead stowage compartment, is directly attached to the first bracket 22 in its protruding part.

For compensating manufacturing-induced measurement tolerances, the first bracket 22 comprises an attachment device 26 having a rotatably supported sleeve 28 with an eccentric borehole 30. A connection element 32 can be inserted into the borehole 30 and will then assume a position given by the rotational position of the sleeve 28 adjustable and arrestable through an adjustment element 34. The connection element 32 is introduced into the piece of equipment 24 and connects it to the first bracket 22. By rotating the sleeve 28, the radial distance of the connection element 32 to the inner flange 8 is adjustable. The sleeve 28 is arrestable to maintain the adjusted rotational position. It may be useful to use a device exemplarily shown in EP3623646A1.

A second pattern 36 of drill holes 20 is arranged in a vertically distanced region of the stiffening frames 4. Here, a second bracket 38 is attached. A first tie rod 40 having a variable length is connected to the second bracket 38 and the piece of equipment 24. Due to the position of the second pattern 36, the first tie rod 40 is oriented substantially horizontally. Thus, the piece of equipment 24 is supported in a lateral direction. For compensating manufacturing induced measure tolerances, the length of the first tie rod 40 is adjusted after installation.

The axial stiffening elements 14 comprise a third pattern 42 of drill holes 20. It is adapted for receiving a third bracket 44, to which a second tie rod 46 is attached. The third brackets 44 are placed in one of the radial outer cutouts 16. The second tie rod 46 connects the third bracket 44 with the piece of equipment 24. The second tie rod 46 clearly extends clearly in an axial, longitudinal direction. Due to the use of a tie rod, a variable distance to the third bracket 44 can be assumed to provide for a tolerance compensation.

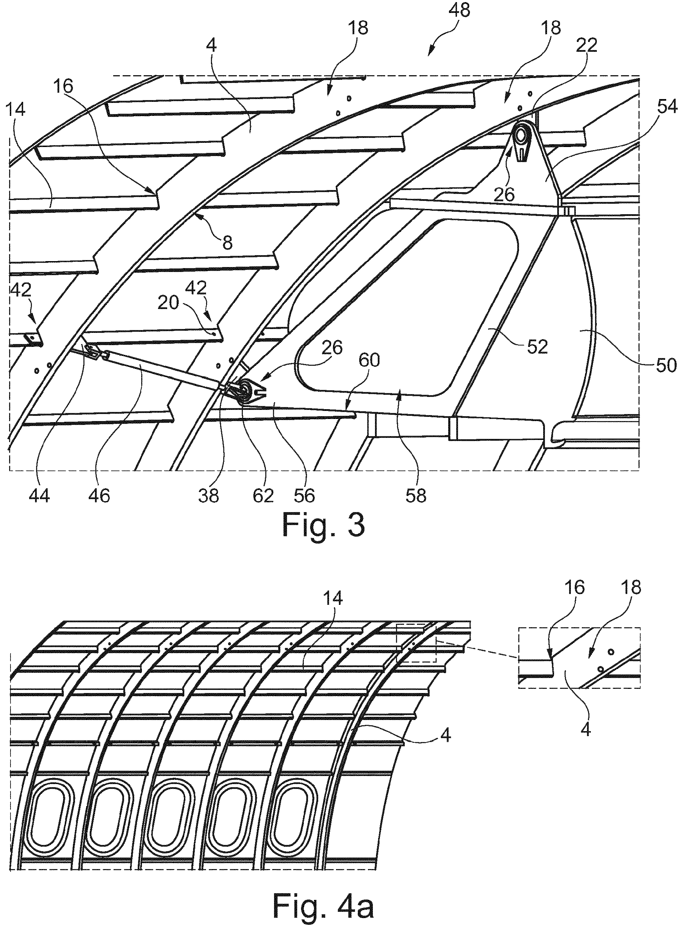

In an alternative structural system 48 shown in Fig. 3, an attachment device 26 is attached to the second bracket 38, such that the second bracket 38 is directly connectable to a piece of equipment 50. In the shown example, the piece of equipment 50 is modified and comprises a support frame 52. It is a rigid component, which comprises a first attachment region 53 having a first lug 54 protruding at an upper end in a vertical direction, as well as a second attachment region 55 having a second lug 56 extending at a lateral end in a lateral direction toward the skin 12. The first lug 54 is connected to the first bracket 22, while the second lug 56 is connected to the second bracket 38 through the attachment device 26. The support frame 52 comprises a central cutout 58, which is provided for reducing the weight of the support frame 52. Furthermore, the support frame 52 exemplarily comprises a bottom edge 60, which is oriented substantially horizontal, e.g. parallel to a cabin floor. The second tie rod 46 is attached to the third bracket 44 and a connecting element 62, which is attached to and exemplarily protrudes from the attachment device 26. Thus, a support in the longitudinal direction is provided.

By providing the stiffening frames 4 exemplarily having two patterns 18 and 36 of drill holes 20 as well as axial stiffening elements 14 having a third pattern 42 of drill holes 20, pieces of equipment may flexibly be installed without requiring the drilling of drill holes directly from inside the structure prior to installation of the pieces of equipment. Tolerance compensation may be conducted through the use of tie rods or the above mentioned attachment devices.

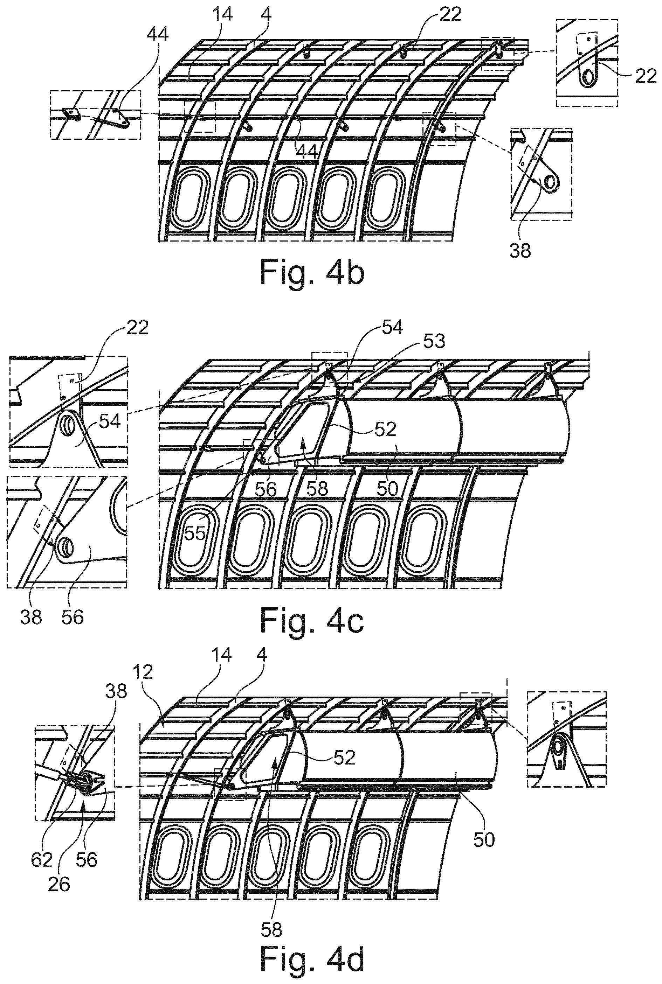

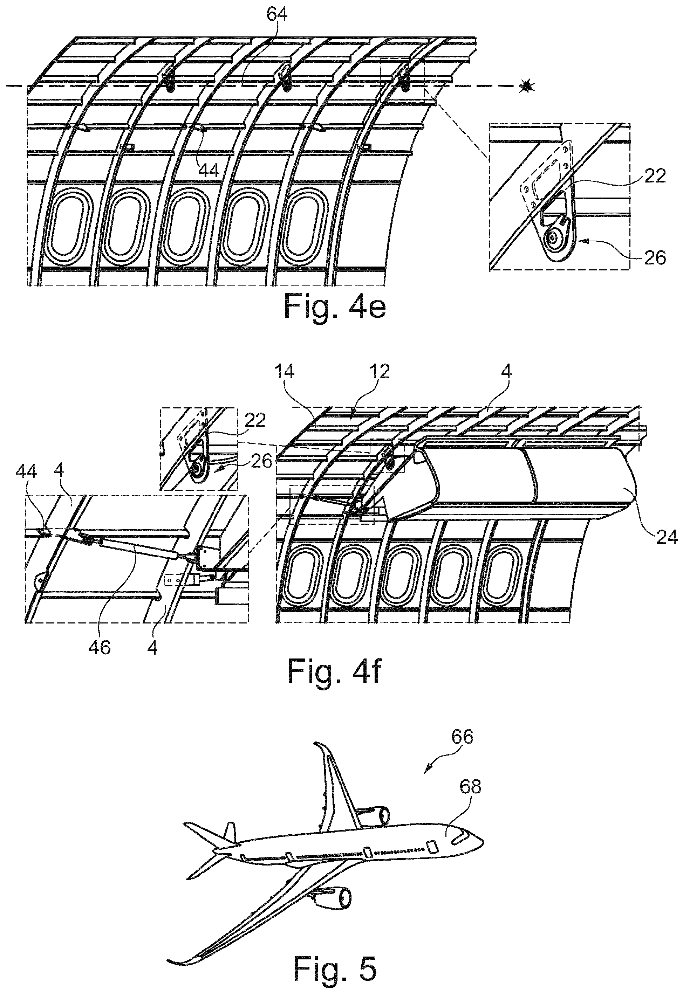

In fig. 4a to 4f, the process of attaching pieces of equipment is shown. Fig. 4a shows the stiffening frames 4 and the axial stiffening elements 14, which together with the skin 12 create an aircraft structure. In fig. 4b, first brackets 22, second brackets 38 and third brackets 44 are attached as previously shown in selected stiffening frames 4 and axial stiffening elements 14. In fig. 4c, the piece of equipment 50 is advanced to the first and second brackets 22 and 38. In fig. 4d, the attachment devices 26 are adjusted for tolerance compensation. Also, the second tie rod 46 is installed and adjusted in its length. In fig. 4e, the process of fig. 4b is slightly modified for fixing the piece of equipment 24. Here, the eccentric boreholes 30 of the attachment devices 26 are adjusted through the use of a laser beam 64 provided from an external source. The laser beam 64 comprises a defined spatial alignment to the structure and is used for aligning all the boreholes 32 this defined spatial alignment, such that the laser beam 64 extends through all first brackets 22 after the alignment. Figure 4f shows the attachment of the piece of equipment 24 afterwards.

Fig. 5 shows an aircraft 66 having a fuselage 68 created by the structural system 2 or 48 together with the skin 12. Inside, a plurality of pieces of equipment 24 or 50 is installed.

In addition, it should be pointed out that "comprising" does not exclude other elements or steps, and "a" or "an" does not exclude a plural number. Reference characters in the claims are not to be interpreted as limitations.

### REFERENCE NUMERALS

- 2: structural system
- 4: circumferential stiffening frame
- 6: web
- 8: inner flange
- 10: outer flange
- 12: skin
- 14: axial stiffening element
- 16: radial outer cutout
- 18: first pattern
- 20: drill hole
- 22: first bracket
- 24: piece of equipment
- 26: attachment device
- 28: sleeve
- 30: borehole32 connection element
- 34: adjustment element
- 36: second pattern
- 38: second bracket
- 40: first tie rod
- 42: third pattern
- 44: third bracket
- 46: second tie rod
- 48: structural system
- 50: piece of equipment
- 52: support frame
- 53: first attachment region
- 54: first lug
- 55: second attachment region
- 56: second lug
- 58: central cutout
- 60: bottom edge
- 62: connecting element
- 64: laser beam
- 66: aircraft
- 68: fuselage

## Claims

1. A structural system (2, 48) for an aircraft (66), comprising:
circumferential stiffening frames (4) for stiffening a fuselage (68) of the aircraft, the stiffening frames (4) comprising a cross-sectional profile having a web (6) enclosed by a radial inner flange (8) and a radial outer flange (10);
at least one first bracket (22); and
at least one attachment device (26) connectable to the at least one first bracket (22) for fastening a piece of equipment (24, 50) to the at least one first bracket (22),
wherein the stiffening frames (4) each comprise a first pattern (18) of drill holes (20) adapted for receiving the at least one first bracket (22);
wherein the at least one first bracket (22) is adapted to protrude from the stiffening frames (4) in a radial direction when attached; and
wherein the attachment device (26) is adapted for fastening the piece of equipment (24, 50) in a variable, arrestable radial distance to the respective first bracket (22);
wherein the structural system (2, 48) further comprises at least one support frame (52) attachable to the piece of equipment (24, 50),
the at least one support frame (52) having a first attachment region (53) for connecting to the at least one first bracket (22) and having a second attachment region (55) for connecting to a further connecting element; and
wherein the support frame (52) has a substantially triangular shape.

2. The structural system (2, 48) of claim 1,
further comprising at least one second bracket (38),
wherein the stiffening frames (4) each comprise a second pattern (36) of drill holes (20) adapted for receiving the at least one second bracket (38), and
wherein the second pattern (36) is arranged at a distance to the first pattern (18).

3. The structural system (2, 48) of claim 2,
wherein the further connecting element comprises the at least one second bracket (38) in combination with the at least one attachment device (26).

4. The structural system (2, 48) of any of the preceding claims,
further comprising axial stiffening elements (14),
wherein the stiffening frames (4) comprise radial outer cutouts (16) for letting the axial stiffening elements (14) pass through in a transverse direction to the respective stiffening frame (4), and
wherein at least one of the axial stiffening elements (14) comprises a third pattern (42) of drill holes (20) for receiving at least one third bracket (44).

5. The structural system (2, 48) of claim 4,
further comprising a tie rod (46) having a variable length and being connectable to the at least one third bracket (44) for supporting the piece of equipment (24, 50) in a longitudinal direction.

6. The structural system (2, 48) of any of the preceding claims,
wherein the attachment device (26) comprises a rotatable and arrestable sleeve (28) having an eccentric borehole (30) for tolerance compensation in a radial direction.

7. The structural system (2, 48) of any of the preceding claims,
wherein the first pattern (18) is arranged in a top region of the circumferential stiffening frames (4).

8. The structural system (2, 48) of claim 2,
wherein the second pattern (36) is arranged in a lateral region of the circumferential stiffening frames (4).

9. Aircraft (66), having a structural system (2, 48) according to any of the preceding claims and at least one piece of equipment (24, 50) attachable to at least one of the circumferential stiffening frames (4) of the structural system (2, 48) through the at least one first bracket (22).

10. Aircraft (66) of claim 9, wherein the at least one piece of equipment (24, 50) comprises an overhead stowage bin.

11. Aircraft (66) of claim 9 or 10, wherein the at least one piece of equipment (24, 50) is attachable to the structural system (2, 48) through the at least one second bracket (38) of claim 2 and/or the third bracket (44) of claim 6.

## Patentansprüche

1. Strukturelles System (2, 48) für ein Luftfahrzeug (66), umfassend:
umlaufende Versteifungsrahmen (4) zum Versteifen eines Rumpfs (68) des Luftfahrzeugs, wobei die Versteifungsrahmen (4) ein Querschnittsprofil mit einem Steg (6) umfassen, der von einem radialen Innenflansch (8) und einem radialen Außenflansch (10) umschlossen ist, mindestens eine erste Halterung (22) und
mindestens eine Befestigungsvorrichtung (26), die mit der mindestens einen ersten Halterung (22) zum Befestigen eines Ausrüstungsteils (24, 50) an der mindestens einen ersten Halterung (22) verbindbar ist,
wobei die Versteifungsrahmen (4) jeweils ein erstes Muster (18) von Bohrlöchern (20) umfassen, die zur Aufnahme der mindestens einen ersten Halterung (22) ausgeführt sind,
wobei die mindestens eine erste Halterung (22) dazu ausgeführt ist, von den Versteifungsrahmen (4) in einer radialen Richtung vorzuragen, wenn sie angebracht ist, und
wobei die Befestigungsvorrichtung (26) zum Befestigen des Ausrüstungsteils (24, 50) in einem variablen, arretierbaren radialen Abstand von der jeweiligen ersten Halterung (22) ausgeführt ist,
wobei das strukturelle System (2, 48) ferner mindestens einen Stützrahmen (52) umfasst, der an dem Ausrüstungsteil (24, 50) befestigt werden kann,
wobei der mindestens eine Stützrahmen (52) einen ersten Befestigungsbereich (53) zum Verbinden mit der mindestens einen ersten Halterung (22) und einen zweiten Befestigungsbereich (55) zum Verbinden mit einem weiteren Verbindungselement aufweist und
wobei der Stützrahmen (52) eine im Wesentlichen dreieckige Form aufweist.

2. Strukturelles System (2, 48) nach Anspruch 1, ferner umfassend mindestens eine zweite Halterung (38),
wobei die Versteifungsrahmen (4) jeweils ein zweites Muster (36) von Bohrlöchern (20) umfassen, die zur Aufnahme der mindestens einen zweiten Halterung (38) ausgeführt sind, und
wobei das zweite Muster (36) in einem Abstand von dem ersten Muster (18) angeordnet ist.

3. Strukturelles System (2, 48) nach Anspruch 2,
wobei das weitere Verbindungselement die mindestens eine zweite Halterung (38) in Kombination mit der mindestens einen Befestigungsvorrichtung (26) umfasst.

4. Strukturelles System (2, 48) nach einem der vorhergehenden Ansprüche,
ferner umfassend axiale Versteifungselemente (14),
wobei die Versteifungsrahmen (4) radiale äußere Ausschnitte (16) zum Hindurchlassen der axialen Versteifungselemente (14) in einer Querrichtung zu dem jeweiligen Versteifungsrahmen (4) umfassen und
wobei mindestens eines der axialen Versteifungselemente (14) ein drittes Muster (42) von Bohrlöchern (20) zur Aufnahme mindestens einer dritten Halterung (44) umfasst.

5. Strukturelles System (2, 48) nach Anspruch 4,
ferner umfassend eine Zugstange (46) mit einer variablen Länge, die mit der mindestens einen dritten Halterung (44) zum Stützen des Ausrüstungsteils (24, 50) in einer Längsrichtung verbindbar ist.

6. Strukturelles System (2, 48) nach einem der vorhergehenden Ansprüche,
wobei die Befestigungsvorrichtung (26) eine drehbare und arretierbare Hülse (28) mit einem exzentrischen Bohrloch (30) zum Toleranzausgleich in einer radialen Richtung umfasst.

7. Strukturelles System (2, 48) nach einem der vorhergehenden Ansprüche,
wobei das erste Muster (18) in einem oberen Bereich der umlaufenden Versteifungsrahmen (4) angeordnet ist.

8. Strukturelles System (2, 48) nach Anspruch 2,
wobei das zweite Muster (36) in einem seitlichen Bereich der umlaufenden Versteifungsrahmen (4) angeordnet ist.

9. Luftfahrzeug (66) mit einem strukturellen System (2, 48) nach einem der vorhergehenden Ansprüche und mindestens einem Ausrüstungsteil (24, 50), das an mindestens einem der umlaufenden Versteifungsrahmen (4) des strukturellen Systems (2, 48) durch die mindestens eine erste Halterung (22) befestigt werden kann.

10. Luftfahrzeug (66) nach Anspruch 9, wobei der mindestens eine Ausrüstungsteil (24, 50) ein Überkopfgepäckfach umfasst.

11. Luftfahrzeug (66) nach Anspruch 9 oder 10, wobei der mindestens eine Ausrüstungsteil (24, 50) durch die mindestens eine zweite Halterung (38) nach Anspruch 2 und/oder die dritte Halterung (44) nach Anspruch 6 an dem strukturellen System (2, 48) befestigbar ist.

## Revendications

1. Système structural (2, 48) d'aéronef (66), comprenant :
des cadres raidisseurs circonférentiels (4) pour rigidifier un fuselage (68) de l'aéronef, les cadres raidisseurs (4) comprenant un profil de section transversale ayant une âme (6) entourée par une bride interne radiale (8) et une bride externe radiale (10) ;
au moins un premier support (22) ; et
au moins un dispositif de fixation (26) pouvant être relié à l'au moins un premier support (22) pour fixer une pièce d'équipement (24, 50) à l'au moins premier support (22),
les cadres raidisseurs (4) comprenant chacun un premier motif (18) de trous de perçage (20) conçus pour recevoir l'au moins un premier support (22) ;
l'au moins un premier support (22) étant conçu pour faire saillie des cadres raidisseurs (4) dans une direction radiale lorsqu'il est fixé ; et
le dispositif de fixation (26) étant conçu pour fixer la pièce d'équipement (24, 50) à une distance radiale variable et blocable par rapport au premier support (22) respectif ;
le système structural (2, 48) comprenant en outre au moins un cadre de support (52) pouvant être fixé à la pièce d'équipement (24, 50),
l'au moins un cadre de support (52) ayant une première zone de fixation (53) pour la liaison à l'au moins un premier support (22) et ayant une seconde zone de fixation (55) pour la liaison à un autre élément de liaison ; et
le cadre de support (52) présentant une forme sensiblement triangulaire.

2. Système structural (2, 48) selon la revendication 1,
comprenant en outre au moins un deuxième support (38), les cadres raidisseurs (4) comprenant chacun un deuxième motif (36) de trous de perçage (20) conçus pour recevoir l'au moins un deuxième support (38), et
le deuxième motif (36) étant disposé à une certaine distance du premier motif (18).

3. Système structural (2, 48) selon la revendication 2,
l'autre élément de liaison comprenant l'au moins un deuxième support (38) en combinaison avec l'au moins un dispositif de fixation (26).

4. Système structural (2, 48) selon l'une quelconque des revendications précédentes,
comprenant en outre des éléments raidisseurs axiaux (14), les cadres raidisseurs (4) comprenant des découpes externes radiales (16) pour laisser passer les éléments raidisseurs axiaux (14) dans une direction transversale au cadre raidisseur (4) respectif, et
au moins un des éléments raidisseurs axiaux (14) comprenant un troisième motif (42) de trous de perçage (20) pour recevoir au moins un troisième support (44).

5. Système structural (2, 48) selon la revendication 4,
comprenant en outre une barre de liaison (46) ayant une longueur variable et pouvant être reliée à l'au moins un troisième support (44) pour supporter la pièce d'équipement (24, 50) dans une direction longitudinale.

6. Système structural (2, 48) selon l'une quelconque des revendications précédentes,
le dispositif de fixation (26) comprenant un manchon rotatif et blocable (28) présentant un alésage excentrique (30) pour la compensation de tolérance dans une direction radiale.

7. Système structural (2, 48) selon l'une quelconque des revendications précédentes,
le premier motif (18) étant disposé dans une région supérieure des cadres raidisseurs circonférentiels (4).

8. Système structural (2, 48) selon la revendication 2,
le deuxième motif (36) étant disposé dans une région latérale des cadres raidisseurs circonférentiels (4).

9. Aéronef (66), ayant un système structural (2, 48) selon l'une quelconque des revendications précédentes et au moins une pièce d'équipement (24, 50) pouvant être fixée à au moins l'un des cadres raidisseurs circonférentiels (4) du système structural (2, 48) par l'intermédiaire de l'au moins un premier support (22).

10. Aéronef (66) selon la revendication 9, l'au moins une pièce d'équipement (24, 50) comprenant un bac de rangement en hauteur.

11. Aéronef (66) selon la revendication 9 ou 10, l'au moins une pièce d'équipement (24, 50) pouvant être fixée au système structural (2, 48) par l'intermédiaire de l'au moins un deuxième support (38) selon la revendication 2 et/ou du troisième support (44) selon la revendication 6.
